(19)

**Europäisches Patentamt**

**European Patent Office**

**Office européen des brevets**

(11) **EP 2 535 682 A2**

(12) **EUROPÄISCHE PATENTANMELDUNG**

(43) Veröffentlichungstag:
**19.12.2012 Patentblatt 2012/51**

(51) Int Cl.:
***G01B 11/06*** *(2006.01)* ***G01B 11/24*** *(2006.01)*

(21) Anmeldenummer: **12171156.8**

(22) Anmeldetag: **07.06.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **15.06.2011 DE 102011077567**

(71) Anmelder:
• **Leibniz-Institut für Polymerforschung Dresden e.V.**
**01069 Dresden (DE)**

• **Plastic Logic GmbH**
**01109 Dresden (DE)**

(72) Erfinder:
• **Calvimontes, Alfredo**
**01187 Dresden (DE)**
• **Lederer, Kay**
**01109 Dresden (DE)**

(74) Vertreter: **Rauschenbach, Marion**
**Rauschenbach Patentanwälte,**
**Bienertstrasse 15**
**01187 Dresden (DE)**

(54) **Verfahren und Vorrichtung zur Ermittlung der Oberflächentopografie von beschichteten, reflektierenden Oberflächen**

(57) Die Erfindung bezieht sich auf das Gebiet der Messtechnik und betrifft ein Verfahren und eine Vorrichtung, wie es beispielsweise in der Dünnschichttechnik für organische dielektrische, halbleitende oder leitende Schichten auf Substraten angewandt werden kann.

Die Aufgabe der Erfindung besteht in der Angabe eines Verfahrens und einer Vorrichtung, mit dem sowohl die Oberflächentopographie der Beschichtung als auch der Oberfläche unabhängig voneinander an derselben Position ermittelt werden kann.

Die Aufgabe wird gelöst durch ein Verfahren, bei dem mittels einer chromatischen Weißlichtmessung die dreidimensionale Topografie der Beschichtung und nachfolgend mittels UV-Interferometrie die Dicke der Beschichtung ermittelt wird und durch Vergleich mit den Gesamtabmessungen der beschichteten Oberfläche die Oberflächentopographie der beschichteten Oberfläche ermittelt wird.

Die Aufgabe wird weiterhin gelöst durch eine Vorrichtung, bei der eine Vorrichtung zur chromatischen Weißlichtmessung und eine Vorrichtung zur UV-Interferometrie auf einem Messplatz angeordnet sind.

Fig. 1

EP 2 535 682 A2

**Beschreibung**

Die Erfindung bezieht sich auf das Gebiet der Messtechnik und betrifft ein Verfahren und eine Vorrichtung zur Ermittlung der Oberflächentopografie von beschichteten, reflektierenden Oberflächen, wie es beispielsweise in der Dünnschichttechnik für organische dielektrische, halbleitende oder leitende Schichten auf Substraten angewandt werden kann.

Ein Verfahren zur Ermittlung der Filmdicke durch interferometrische Spektralabbildungen wurde 1999 von Cabib et al. offenbart (US 5.856.871 B). Dieses Verfahren ermöglicht die Erstellung einer Abbildung der Dicke des Films, der auf einem Substrat aufliegt. Allerdings sind mit diesem Verfahren lediglich Informationen über die Filmdicke an verschiedenen Koordinaten ermittelbar. Es sind damit jedoch keine Informationen über die Film- und Substrattopographien erhältlich.

Im Jahr 2008 ist von De Groot et al. ein Verfahren zum Scannen der Interferometrie für die Messung geringer Filmdicken und Oberflächen bekannt geworden (US 7.324.210 B2). Dieses Verfahren ermöglicht das Scannen von Interferometriedaten mit niedriger Kohärenz für mindestens eine räumliche Position eines Probestücks mit mehrfachen Grenzflächen. Allerdings kann dieses Verfahren nur auf die simultanen Messungen von Filmdicke und Topographie angewandt werden.

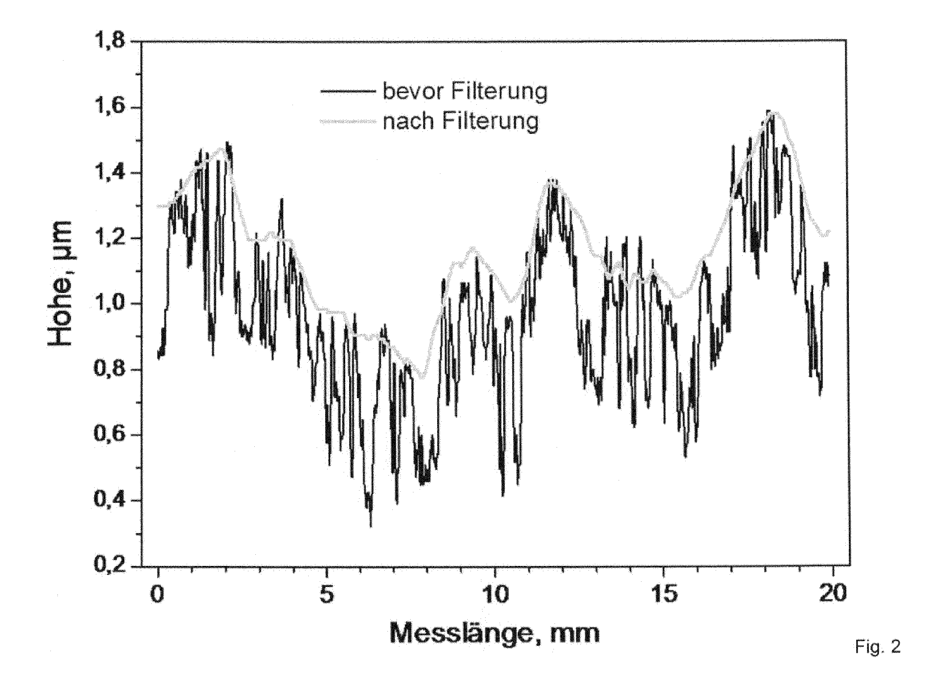

Im Gegensatz zu Halbleitergeräten auf Siliziumbasis, bei denen funktionale Schichten zumeist anorganisch sind und durch Vakuumaufdampfungstechniken gebildet werden, erfolgt die Aufbringung von Polymerschichten bei OED (Organic Thin Film Transistor), OLED (Organic Light Emitting Diode) oder OSC (Organic Solar Cell), zusammenfassend im Folgenden als OED (Organic Electronic Devoce) bezeichnet, durch eine Vielzahl verschiedener lösemittelbasierter Techniken. Zu den häufigsten Techniken gehören das Rotationsbeschichten, das Sprühbeschichten, das Extrusions- oder Schlitzdüsenbeschichten und das Drucken. Die Vakuumaufdampfung kann auch für Polymermaterialien verwendet werden, doch sie ist aufgrund der Stabilitätsanforderungen bei hohen Temperaturen unter Vakuum und bei erhöhten Temperaturen auf eine kleine Anzahl von Verbindungen beschränkt. Die Herstellung organischer Elektronikgeräte beinhaltet die Auftragung dünner Polymerfilme, die als dielektrische Schichten in einem OED dienen (A. Facchetti et al: Advanced Materials 2005, 17, 1705-1725). Die Dicke und die Materialzusammensetzung solcher dielektrischen Schichten bestimmen die Kapazität der Schicht, einen Parameter, der entscheidend die Parameter eines Dünnfilmtransistors bestimmt (J. C. Anderson, Thin Solid Films 1976, 38, 151-161). Die Kapazität einer dielektrischen Schicht (Abb. 2) ergibt sich durch die folgende Gleichung:

$$C = \varepsilon_0 \varepsilon_r \cdot \frac{A}{d} \qquad (1)$$

Wenn d der Abstand zwischen den Kondensatorplatten, entsprechend der Dicke der dielektrischen Schicht, $A$ der Bereich der Kondensatorplatten und $\varepsilon_0$ die absolute dielektrische Konstante des Vakuums ist ($\varepsilon_0 = 8{,}8 \cdot 10^{-12}$ $As$ $(Vm)^{-1}$). Die Materialeigenschaften der dielektrischen Schicht sind in der relativen Dielektrizitätskonstante $\varepsilon_r$ der dielektrischen Schicht enthalten, die in der Halbleiterindustrie häufig als $\kappa$ bezeichnet wird. Materialien mit einem hohen $\kappa$-Wert (größere $\varepsilon_r$) ermöglichen eine dünnere dielektrische Schicht auf einem Transistor bei konstanter Kapazität oder eine Reduzierung der Leckströme bei konstanter Dicke. Materialien mit einem niedrigen $\kappa$-Wert (kleinere $\varepsilon_r$) werden als Isolatoren zwischen Leiterbahnen verwendet und reduzieren parasitäre Kapazitäten (J. Veres et al: Advanced Functional Materials 2003, 13-3, 199-204).

Die beiden Parameter $d$ und $\varepsilon_r$ bestimmen die dielektrischen Eigenschaften der funktionalen Polymerschicht. $\varepsilon_r$ ist eine Funktion der Frequenz und in dem Frequenzbereich sichtbaren Lichtes ( ~ 550 THz) bezieht sie sich auf den Brechungsindex und die magnetische Permeabilität $\mu_r$, und zwar durch die folgende Gleichung:

$$n^2 = \mu \cdot \varepsilon_r \qquad (2)$$

Für optisch transparente Schichten $\mu_r = 1$ kann daher die Annäherung $\varepsilon_r = n^2$ angenommen werden. Dadurch reduzieren sich die Parameter, die die Homogenität der dielektrischen Polymerschicht beschreiben, auf $n$, $d$ und die Parameter für die Oberflächenrauheit.

Interferometrie wurde verwendet, um das Dickenprofil transparenter organischer Polymerfilme zu beschreiben (S.W. Kim et al: Applied Optics 1999, 38-28, 5968-5973; H.W. Shabana, Polymer Testing 2004, 23, 695-702; J.S. Hill, J. Phys. D: Appl. Phys. 1971, 4, 741-747), doch sie kann nur das Produkt aus $n \bullet d$ messen. Die Oberflächentopographie dielektrischer Filme und d wurden durch eine Reihe von Techniken beschrieben, die AFM, SEM, TEM beinhalten (K. Zalamova et al: Chem. Mater. 2006, 18, 5897-5906). Diese Techniken zeigen die Oberflächenmerkmale mit sehr hoher Auflösung, doch sie haben den Nachteil, dass sie nur in einem sehr kleinen Maßstab abtasten. Um die Filmdicke, den Brechungsindex und die Daten zur Oberflächenrauheit im $\mu m^2$-Maßstab zu messen (S.W. Kim et al: Applied Optics 1999, 38-28, 5968-5973; H.W. Shabana, Polymer Testing 2004, 23, 695-702; J.S. Hill, J. Phys. D: Appl. Phys. 1971, 4, 741-747) wurde Interferometrie verwendet.

Die hochwertige Herstellung von OED-Geräten umfasst die Roll-to-Roll-Verarbeitung, auch bekannt als 'Web-'Verarbeitung, Reel-to-Reel-Verarbeitung oder R2R. Das ist das Herstellen elektronischer Geräte direkt auf einer Rolle flexiblen Kunststoff- oder Metallfoliensubstrates. Die Verwendung flexibler Substrate fügt dem Auftragen eines organischen dielektrischen Films eine weitere Herausforderung hinzu: nämlich einen zusätzlichen Rauheitsparameter im $cm^2$-Maßstab, der als "Meso-Rauheit" bezeichnet wird. Die Dekonvolution der "Meso-Rauheit" aus der Oberflächen- und Mikrorauheit, der Dickenveränderung und der Veränderung der Materialzusammensetzung ist äußerst komplex.

Um die Meso-Rauheit bei der Herstellung berücksichtigen zu können, ist die Ermittlung der Topographie der beschichteten und unbeschichteten Oberflächen wünschenswert.
Mittels des konfokalen Scannens mit chromatischem Weißlicht kann die Topographie beschichteter und unbeschichteter Oberflächen ermittelt werden. Dazu ist eine Vorrichtung bekannt (MicroGlider - Fries Research & Technology GmbH, Deutschland).
Mit dieser Vorrichtung wird jeweils ein Objektpunkt vermessen und mittels (x,y)-Scannen können mehrere dieser Objektpunkte zu einem Objektfeld rekonstruiert werden (www.stilsa.com). Die Vorrichtung verwendet einen chromatischen Weißlichtsensor (CWL) (FoRT-Bildung-Seminar, Oktober 2008, Bergisch-Gladbach; www. Solarius.com), der auf dem Prinzip der chromatischen Aberration von Licht basiert. Weißlicht wird durch einen Messkopf mit einer stark wellenlängenabhängigen Brennweite auf die Oberfläche fokussiert (chromatische Aberration). Das Spektrum des Streulichtes auf der Oberfläche erzeugt einen Höchstwert auf dem Spektrometer. Die Wellenlänge dieses Höchstwertes zeigt zusammen mit einer Kalibriertabelle den Abstand vom Sensor zum Probestück an. Der Sensor funktioniert auf transparenten, stark reflektierenden oder glatten mattschwarzen Oberflächen (A. K. Ruprecht et al: 50. Internat. Koll. TU Ilmenau, Oktober 2005; A. K. Ruprecht et al: Proc. SPIE - Int. Soc. Opt. 2004, 5360-61; www.micro-epsilon.com, www.frt-gmbh.com). Er ist extrem schnell und hat praktisch keine Kanteneffekte.

Weiterhin sind Verfahren und Vorrichtungen bekannt, die Filmdicke auf den beschichteten Oberflächen zu messen. Eine Vorrichtung dazu ist ein interferometrisches Instrument der Firma Fries Research & Technology GmbH, Deutschland. Mit dieser Vorrichtung wird ein Verfahren realisiert, mit dem eine kontaktlose Messung von Einzel- oder Mehrschichtfilmen mit hoher Auflösung durch die Überlagerung von Lichtstrahlen, die an den Rändern eines dünnen Films reflektiert werden, realisiert wird. Die Filmdicke ergibt sich aus der Bewertung des spektralen Interferenzmusters der überlagerten Lichtstrahlen. Dieses gemessene Reflexionsspektrum wird mit einem berechneten Spektrum verglichen, bei dem die unbekannte Dicke systematisch verändert wird, bis beide Spektren übereinstimmen. Dieses Verfahren ermöglicht sowohl die Messung von Einzel- als auch von Mehrschichtfilmen. Die Vorrichtung kann mit verschiedenen Kombinationen von VIS und UV arbeiten.

Nachteilig bei den bekannten Lösungen des Standes der Technik ist, dass die nach bekannten Verfahren ermittelbaren Werte nicht im Wesentlichen gleichzeitig an einem Objekt gemessen und bei beschichteten Oberflächen neben der Topographie der Beschichtung nicht auch die Topographie der Substratoberfläche ermittelbar ist.

Die Aufgabe der Erfindung besteht in der Angabe eines Verfahrens und einer Vorrichtung zur Ermittlung der Oberflächentopografie von beschichteten, reflektierenden Oberflächen, mit dem an einer beschichteten, reflektierenden Oberfläche sowohl die Oberflächentopographie der Beschichtung als auch der beschichteten, reflektierenden Oberfläche im Wesentlichen unmittelbar nacheinander, aber unabhängig voneinander, an derselben Position ermittelt werden kann.

Die Aufgabe wird durch die in den Ansprüchen angegebene Erfindung gelöst. Vorteilhafte Ausgestaltungen sind Gegenstand der Unteransprüche.

Bei dem erfindungsgemäßen Verfahren zur Ermittlung der Oberflächentopografie von beschichteten, reflektierenden Oberflächen wird mittels einer chromatischen Weißlichtmessung die dreidimensionale Topografie der Beschichtung und nachfolgend mittels UV-Interferometrie die Dicke der Beschichtung ermittelt und durch Vergleich mit den Gesamtabmessungen der beschichteten Oberfläche die Oberflächentopografie der beschichteten Oberfläche ermittelt.

Vorteilhafterweise werden als reflektierende Oberflächen metallbeschichtete Glas- oder Polymersubstrate eingesetzt.

Ebenfalls vorteilhafterweise werden als Beschichtungen unvernetzte oder vernetzte Polymere aus Lösung aufgebrachte Polymerschichten eingesetzt.

Weiterhin vorteilhafterweise werden als Polymerschichten bis-Phenol-A-basierte Epoxide, Polystyrol oder Polymethyl-methacrylate aufgebracht.

Bei der erfindungsgemäßen Vorrichtung zur Ermittlung der Oberflächentopografie von beschichteten, reflektierenden Oberflächen sind eine Vorrichtung zur chromatischen Weißlichtmessung und eine Vorrichtung zur UV-Interferometrie auf einem Messplatz angeordnet.

Vorteilhafterweise ist die Vorrichtung zur chromatischen Weißlichtmessung ein chromatischer Weißlichtsensor (CWL).

Weiterhin vorteilhafterweise ist die Vorrichtung zur UV-Interferometrie ein UV-VIS-Interferometer.

Mit dem erfindungsgemäßen Verfahren und der erfindungsgemäßen Vorrichtung wird es erstmals möglich, an einer beschichteten, reflektierenden Oberfläche sowohl die Oberflächentopographie der Beschichtung als auch der beschichteten, reflektierenden Oberfläche im Wesentlichen unabhängig voneinander an derselben Position zu ermitteln.

Erfindungsgemäß kann der Schichtparameter Oberflächenrauheit aus der dielektrischen Schichtdichte $d$ und $n$, d. h. aus der relativen Dielektrizitätskonstante, ermittelt werden. Die Unterteilung der Schichtinformationen in diese einzelnen Parameter ermöglicht einen Vergleich verschiedener Auftragetechniken für dielektrische Polymerschichten für die Herstellung von OED-Geräten.

Die Erfindung kann verwendet werden um:

- die Oberflächenmorphologie, die Topographie und die Beschichtungskonformität dünner organischer dielektrischer, halbleitender und leitender Schichten auf reflektierenden Oberflächen zu bestimmen,
- die Rauheit der Schichtoberfläche und des Oberflächenuntergrundes (Substratuntergrund) zu dekonvolutieren, um reale Abbildungen der Schichtdicke zu erhalten,
- die tatsächliche Schichtdicke bei größeren Längen mit einer Abschnittlänge von bis zu 10 cm zu bewerten,
- die optische Morphologie von Schichtoberflächen, d.h. das Auftreten von Newtonschen Ringen, zu bewerten,
- die Auswirkung von Heterogenitäten der Oberfläche auf die sich ergebende Schichttopographie ohne direkte Messung der Oberflächentopographie zu untersuchen.

Mit dem erfindungsgemäßen Verfahren und der erfindungsgemäßen Vorrichtung ist die Bestimmung der Topographie und des tatsächlichen Schichtdickenprofils in einem Messaufbau am gleichen Messstandort realisiert. Es basiert auf einer Kombination aus chromatischer konfokaler Weißlichtabbildung - einer 3-dimensionalen topographischen Scan-Methode- und UV-VIS-Interferometrie mit dem Ziel, reale 3D-Karten der Schichttopographie und der Schichtdicke und folglich der Oberflächentopographie der Untergrundoberfläche, also der Oberfläche des beschichteten, reflektierenden Substrates, zu erhalten.

Beschichtete Substrate weisen aufgrund der geringen Schichtdicke normalerweise eine erhebliche optische konstruktive und destruktive Interferenz auf (Dünnfilminterferenz). Der Effekt kann leicht visuell und auf Intensitätskarten als "Newtonsche Ringe" erkannt werden.

Ein CWL-Sensor verwendet das optische Prinzip der chromatischen Aberration reflektierten Lichtes, um die Topographie zu bestimmen. Eine plötzliche Veränderung des reflektierten VIS-Spektrums aufgrund konstruktiver oder destruktiver Interferenz könnte einer falschen Auslegung der gemessenen Daten führen. Dieses unerwünschte Phänomen ist besonders bedeutend, wenn es zu einer destruktiven Interferenz kommt. In diesem Fall zeigt die Instrumentensoftware nicht vorhandene Hohlräume an. Allerdings bleibt das Original nahezu unverändert, denn es gehört zu einem größeren Maßstab (Meso-Morphologie).

Um den Interferenzeffekt gemessener topographischer Daten aufzuheben, wurde eine Kombination mathematischer Operationen angewandt (Stout, K.J. et al: Commission of the European Communities, Brussels-Luxembourg, 1993). Die Filterung erfolgte in vier aufeinander folgenden Schritten:

(i) Beseitigung der Welligkeit durch FFT-Filterung, um die gelegentliche Krümmung von Probestücken entlang der Abschnittlänge von 25mm zu eliminieren,
(ii) Korrektur der Ebene, um die gemessene Ebene anzupassen (es wurde die Centre Mean Plane-Methode verwendet),
(iii) Unterbereichextraktion (Zoomen) eines Bereichs von 20 mm x 20 mm, um den "Randeffekt" aufgrund der FFT-Filterung zu eliminieren, und
(iv) digitale sanfte Filterung der Daten, um den Interferenzeffekt auf die topographischen Daten zu eliminieren.

Nach dem Entfernen der Interferenzringe durch sanfte Filterung bleibt die ursprüngliche Morphologie unverändert. Die ermittelte Topographie entspricht den lokalen Höchstwerten der ursprünglichen Daten.

Der Dünnschichtsensor wird verwendet, um die Schichtdicke auf programmierten Positionen auf dem Probestück zu messen. Die sich daraus ergebenden Daten werden mit den topographischen Daten verglichen, die zuvor durch chromatisches konfokales Scanning an exakt den gleichen x-y-Koordinaten erhalten wurden. Das ist möglich, weil sowohl der CWL-Sensor als auch der Schichtsensor auf dem gleichen Scan-Tisch installiert werden.

Durch die Kombination beider Messmethoden ist es möglich, die Veränderungen der Schichtdicke entlang einer festgelegten Abschnittlänge zu ermitteln und die Topographie der beschichteten Oberfläche (Substrat) unter der Schicht zu berechnen. Das Profilieren der Topographie unter der Schicht war möglich durch Subtraktion jedes Schichtdickenwertes von der entsprechenden topographischen Höhe, die zuvor durch CWL gemessen worden war.

Simultan zur Topographiemessung kann der CWL-Sensor auch Intensitätskarten des reflektierten Weißlichtes erstellen. Durch einen Vergleich der ursprünglichen topographischen Daten, der Intensitätskarten und der gefilterten Topographie ist es möglich, die optische Morphologie aufgrund von Lichtinterferenzen und die tatsächliche Oberflächentopographie aufeinander zu beziehen.

Die Erfindung bietet die folgenden Vorteile:

● Sie kombiniert zwei Methoden, zur Ermittlung der Topographie und der Schichtdicke dünner organischer Schichten aus Dielektrika, Halbleiter oder Leiter am gleichen Messstandort.
● Sie ermöglicht die Visualisierung der optischen Morphologie von Schichtoberflächen mittels Intensitätskarten.
● Sie kombiniert eine Methode, einen Geräteaufbau und einen Datenauswertungsalgorithmus, um die Meso-Morphologie einer Schichtoberfläche getrennt von der Oberflächenmorphologie der beschichteten Oberfläche (Substrat) zu beschreiben.
● Sie ermöglicht das Abbilden eines größeren Oberflächenbereiches im $cm^2$ - (Meso) Bereich.

Nachfolgend wird die Erfindung an einem Ausführungsbeispiel näher erläutert.

Dabei zeigen

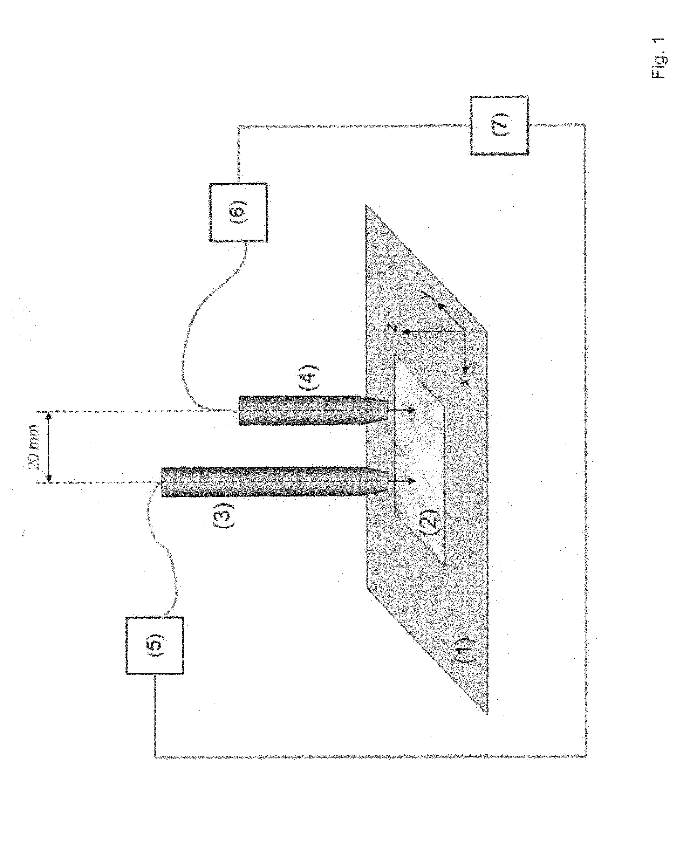

Fig. 1 den schematischen Aufbau der erfindungsgemäßen Vorrichtung
Fig. 2 eine grafische Darstellung der aufgenommenen Messwerte

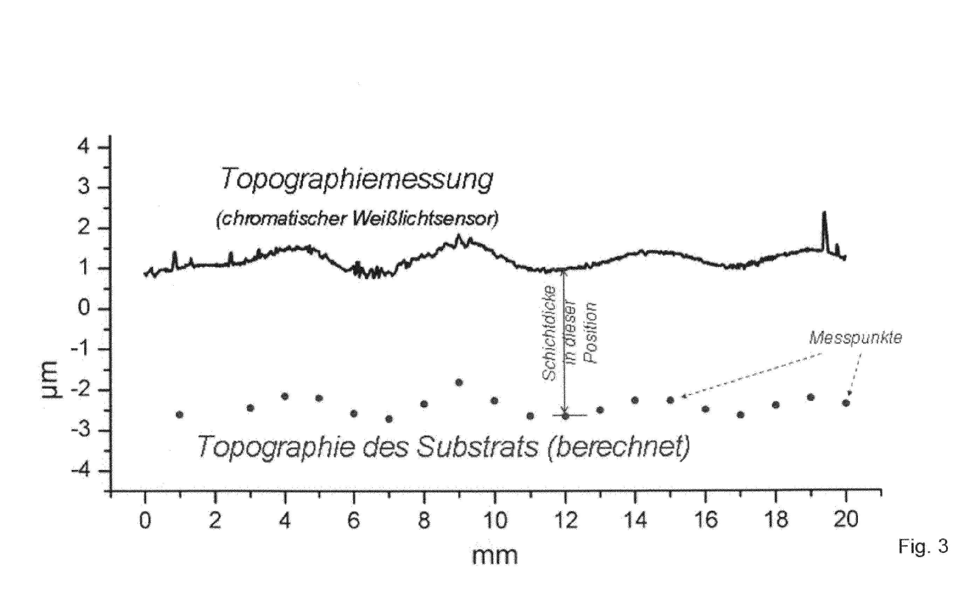

Fig. 3 eine grafische Darstellung der gemessenen und berechneten Topografie der Beschichtung

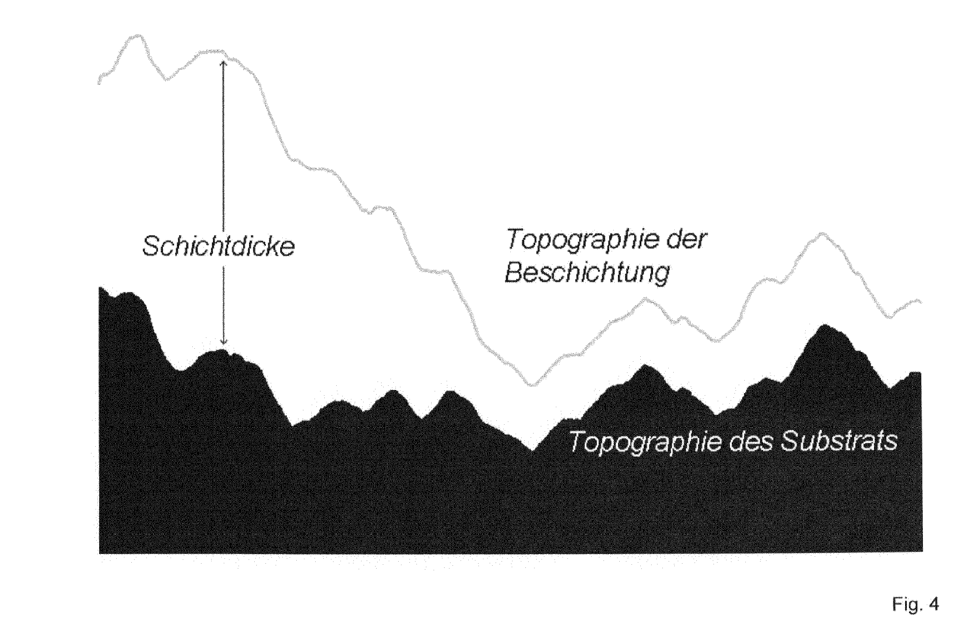

Fig.4 eine schematische Darstellung der ermittelten Schichtdicke und Topografie der Beschichtung und der Substratoberfläche

Beispiel

Aus Glas, welches mit einer ~0,5 mm dicken Schicht aus Polyethylen-Terephtalat-(PET-) Folie beschichtet ist, werden 3 Proben mit den Abmessungen von 10x10cm$^2$ hergestellt. Auf diese Proben wurde jeweils eine vernetzbare Polymerschicht aus einem bis-Phenol-A-basierten Epoxidharz, aufgebracht.

Diese schlitzdüsenbeschichteten Proben 1, 2 und 3 wurden mithilfe des Schichtdickensensors (FTR) einer Schichtdickenmessung unterzogen. Für jedes Probestück wurden Schichtdickenmessungen auf drei verschiedenen Profilen entlang der vollständigen gefilterten Abschnittlänge von 20 mm durchgeführt. Der Abstand zwischen den Filmdickenmessungen entlang des Profils betrug 1 mm.

Das Profilieren der Probentopographie unter der Schicht war möglich durch Subtraktion jedes Schichtdickenwertes von der entsprechenden topographischen Höhe, die zuvor durch CWL gemessen worden war.

In Tabelle 1 sind die Ergebnisse zusammengefasst.

An den Proben 1 und 2 wurde keine bedeute Lichtinterferenz festgestellt. Aus diesem Grund wurde keine digitale sanfte Filterung angewandt. Dann wurde die Oberflächentopographie unter Verwendung der Meso- und Mikrotopographie und der Schwachlichtinterferenz als Schichtoberflächenreferenz berechnet.

An Probe 3 wurde eine starke Lichtinterferenz festgestellt, weshalb die mathematische Filterung angewandt worden ist. Die Oberflächentopographie der beschichteten Oberfläche wurde nur mithilfe der Meso-Topographie berechnet. In diesem Fall war die höhere Interferenz die Folge einer dünneren Schicht (siehe Tabelle 1).

In allen Fällen, insbesondere bei Probe 3, wurde die topographische Konformität zwischen der Schichtoberfläche und der Probe überprüft. Die topographische Beschreibung zeigte zuvor, dass diese Oberfläche im Vergleich zu den Proben 1 und 2 ebener ist ($S_{ku}$ 3, niedrigere $S_t$ und höhere Gesamthöchstwerte im abgebildeten Bereich).

Zusammengefasst ist Schichtoberfläche und Substrat auf schlitzdüsenbeschichteten Oberflächen konform. Daher regelt das Substrat die Schichttopographie des Epoxidpolymers. Die geringere Schichtdicke bei Probe 3 führt zu stärkerem Interferenzrauschen und infolgedessen zu einer stärkeren Dickenstandardabweichung (107 nm). Im Gegensatz dazu führt die größere Schichtdicke von Probe 1 und 2 zu geringerem Interferenzrauschen und einer geringeren Dickenstandardabweichung (jeweils 33 bis 40 nm). Bei schlitzdüsenbeschichteten Substraten weist der Epoxidpolymerfilm physikalischchemische Gleichförmigkeit auf.

Tabelle 1

| Probe | Schichtdicke *nm* | Standardabweichung *nm* | Topographiefeld | Gleichförmigkeit |
|---|---|---|---|---|
| 1 | 3637 | 33 | Meso + Mikrotopographie + Lichtinterferenz | ja |
| 2 | 3535 | 40 | Meso + Mikrotopographie + Lichtinterferenz | ja |

(fortgesetzt)

| Probe | Schichtdicke *nm* | Standardabweichung *nm* | Topographiefeld | Gleichförmigkeit |
|---|---|---|---|---|
| 3 | 1402 | 107 | Mesotopographie | ja |

Bezugszeichenliste

1    Messtisch

2    Probe

3    CWL-Sensor

4    Interferometer

5    Messwertauswertung/Spectrograph

6    Messwertauswertung/Spectrograph

7    Computer

**Patentansprüche**

1.  Verfahren zur Ermittlung der Oberflächentopografie von beschichteten, reflektierenden Oberflächen, bei dem mittels einer chromatischen Weißlichtmessung die dreidimensionale Topografie der Beschichtung und nachfolgend mittels UV-Interferometrie die Dicke der Beschichtung ermittelt wird und durch Vergleich mit den Gesamtabmessungen der beschichteten Oberfläche die Oberflächentopografie der beschichteten Oberfläche ermittelt wird.

2.  Verfahren nach Anspruch 1, bei dem als reflektierende Oberflächen metallbeschichtete Glas- oder Polymersubstrate eingesetzt werden.

3.  Verfahren nach Anspruch 1, bei dem als Beschichtungen unvernetzte oder vernetzte Polymere aus Lösung aufgebrachte Polymerschichten eingesetzt werden.

4.  Verfahren nach Anspruch 3, bei dem als Polymerschichten bis-Phenol-A-basierte Epoxide, Polystyrol oder Polymethyl-methacrylate aufgebracht werden.

5.  Vorrichtung zur Ermittlung der Oberflächentopografie von beschichteten, reflektierenden Oberflächen, bei der eine Vorrichtung zur chromatischen Weißlichtmessung und eine Vorrichtung zur UV-Interferometrie auf einem Messplatz angeordnet sind.

6.  Vorrichtung nach Anspruch 5, bei der die Vorrichtung zur chromatischen Weißlichtmessung ein chromatischer Weißlichtsensor (CWL) ist.

7.  Vorrichtung nach Anspruch 5, bei der die Vorrichtung zur UV-Interferometrie ein UV-VIS-Interferometer ist.

Fig. 1

Fig. 2

Fig. 3

EP 2 535 682 A2

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5856871 B
- US 7324210 B2

**In der Beschreibung aufgeführte Nicht-Patentliteratur**

- **A. FACCHETTI et al.** *Advanced Materials,* 2005, vol. 17, 1705-1725
- **J. C. ANDERSON.** *Thin Solid Films,* 1976, vol. 38, 151-161
- **J. VERES et al.** *Advanced Functional Materials,* 2003, vol. 13-3, 199-204
- **S.W. KIM et al.** *Applied Optics,* 1999, vol. 38-28, 5968-5973
- **H.W. SHABANA.** *Polymer Testing,* 2004, vol. 23, 695-702
- **J.S. HILL.** *J. Phys. D: Appl. Phys.,* 1971, vol. 4, 741-747
- **K. ZALAMOVA et al.** *Chem. Mater.,* 2006, vol. 18, 5897-5906
- **A. K. RUPRECHT et al.** *Internat. Koll. TU Ilmenau,* Oktober 2005, vol. 50
- **A. K. RUPRECHT et al.** *Proc. SPIE - Int. Soc. Opt.,* 2004, 5360-61, www.micro-epsilon.com, www.frt-gmbh.com
- **STOUT, K.J. et al.** *Commission of the European Communities, Brussels-Luxembourg,* 1993